# EUROPEAN PATENT APPLICATION

(11) **EP 4 825 797 A1**
(43) Date of publication of application: **21.10.2026**
(21) Application number: 25745142.7
(22) Date of filing: 22.01.2025
(51) Int. Cl.: C01B 21/072, C08K 9/00, C08L 101/00

(54) **ALUMINUM NITRIDE-BASED FILLER, AND RESIN COMPOSITION**

(30) Priority: 23.01.2024 JP 2024008140
(71) Applicant: U-MAP Co., Ltd., Nagoya-shi, Aichi 464-8601 (JP); Toyo Aluminium Kabushiki Kaisha, Osaka-shi, Osaka 541-0056 (JP)
(72) Inventor: WATANABE, Shota, Nagoya-shi, Aichi 464-8601 (JP); SUZUKI, Sachiko, Osaka-shi, Osaka 541-0056 (JP)
(74) Representative: Dr. Solf & Zapf Patent- und Rechtsanwalts PartG mbB
(86) International application number: PCT/JP2025/001842
(87) International publication number: WO 2025/159101

(57) **Abstract**

The present invention provides an aluminum nitride-based filler having excellent water resistance and thermal conductivity and a resin composition having excellent water resistance and thermal conductivity. The aluminum nitride-based filler of the present invention contains a fibrous aluminum nitride particle having a surface and an oxide coating film formed on the surface, wherein a surface of the oxide coating film on the aluminum nitride particle is subjected to a surface treatment with a phosphorus-based compound, wherein a surface oxygen amount measured by an NDIR method is 1.98% or more and 9.40% or less, and wherein, when a specific surface area of the aluminum nitride particle measured by a BET method is represented by X [m²/g], the surface of the oxide coating film is subjected to the surface treatment with the phosphorus-based compound having a phosphorus content of 0.11X parts by mass or more and 11.0X parts by mass or less relative to 100 parts by mass of the aluminum nitride-based filler.

## Description

### TECHNICAL FIELD

The present invention relates to an aluminum nitride-based filler and a resin composition.

### RELATED ART

Aluminum nitride is known as a material having excellent thermal conductive property, electrical insulation property and the like. In order to utilize such properties, the aluminum nitride has been used in various applications. In particular, aluminum nitride has attracted attention as a thermally conductive filler for imparting high thermal conductivity to a resin composition. For example, resin-made electronic components (resin products), including semiconductor substrates, are increasingly required to address heat generated in electronic components (heat dissipating means) in association with miniaturization and higher integration of electronic devices. For this reason, various techniques in which aluminum nitride is blended into resins as a filler have been proposed.

However, the aluminum nitride is inherently likely to react with water. That is, it is known that the aluminum nitride reacts with water to undergo hydrolysis as shown below, thereby generating ammonia.

AlN + 3H₂O → Al(OH)3 + NH₃↑

Even the aluminum nitride contained in the resins may react with moisture in the atmosphere, moisture in the resins and the like, thereby potentially deteriorating the quality of resin products.

For this reason, attempts have been made to solve the above-described various problems by surface-treating aluminum nitride particles.

For example, there has been proposed an aluminum nitride-based powder consisting of composite particles each having a coating layer formed on a surface of an aluminum nitride particle, wherein (1) the coating layer contains Si, O, H and an alkyl group, and (2) an organic carbon content of the powder is 0.02 to 1.0 wt% (Patent Document 1).

Further, for example, there has been proposed an aluminum nitride-based filler in which an oxide coating film is formed on a surface of an aluminum nitride particle. When a measured value of a specific surface area measured by a BET method is represented by A (m²/g) and a calculated value of a specific surface area calculated on the assumption that a shape of the filler is spherical is represented by B (m²/g), a value of [A/B] is 1 to 29.9 (Patent Document 2).

However, according to these techniques, in fibrous aluminum nitride-based fillers intended to further improve thermal conductivity, no aluminum nitride-based filler having satisfactory water resistance and the like has been obtained, and there has still been a room for further improvement in this regard.

### PRIOR ART DOCUMENT

### PATENT DOCUMENT

Patent document 1: JP-A-2006-290667
Patent document 2: JP-A-2021-127288

### SUMMARY OF THE INVENTION

### PROBLEM TO BE SOLVED BY THE INVENTION

It is an object of the present invention to provide an aluminum nitride-based filler having excellent water resistance and thermal conductivity and also to provide a resin composition having excellent water resistance and thermal conductivity.

### MEANS FOR SOLVING THE PROBLEM

Such an object is achieved by the present inventions (1) to (6) described below.
(1) An aluminum nitride-based filler comprising:
   a fibrous aluminum nitride particle having a surface; and
   an oxide coating film formed on the surface;
   wherein a surface of the oxide coating film on the aluminum nitride particle is subjected to a surface treatment with a phosphorus-based compound,
   wherein a surface oxygen amount measured by an NDIR method is 2.0% or more and 30.0% or less, and
   wherein, when a specific surface area of the aluminum nitride particle measured by a BET method is represented by X [m²/g], the surface of the oxide coating film is subjected to the surface treatment with the phosphorus-based compound having a phosphorus content of 0.03X parts by mass or more and 10X parts by mass or less relative to 100 parts by mass of the aluminum nitride-based filler.
(2) The aluminum nitride-based filler described in the above-mentioned item (1), wherein the phosphorus-based compound is an inorganic phosphoric acid compound or an organic phosphoric acid compound.
(3) The aluminum nitride-based filler described in the above-mentioned item (1) or (2), wherein the specific surface area measured by the BET method is 1.0 m2/g or more and 4.0 m2/g or less.
(4) The aluminum nitride-based filler described in any one of the above-mentioned items (1) to (3), wherein an aspect ratio of the aluminum nitride particle is 2 or more and 200 or less.
(5) A resin composition comprising:
   the aluminum nitride-based filler described in any one of the above-mentioned items (1) to (4); and
   a resin.
(6) The resin composition described in the above-mentioned item (5), wherein a content of the aluminum nitride-based filler is 5% by volume or more and 60% by volume or less.

### EFFECTS OF THE INVENTION

According to the present invention, it is possible to provide an aluminum nitride-based filler having excellent water resistance and thermal conductivity and also to provide a resin composition having excellent water resistance and thermal conductivity.

### BRIEF DESCRIPTION OF THE DRAWINGS

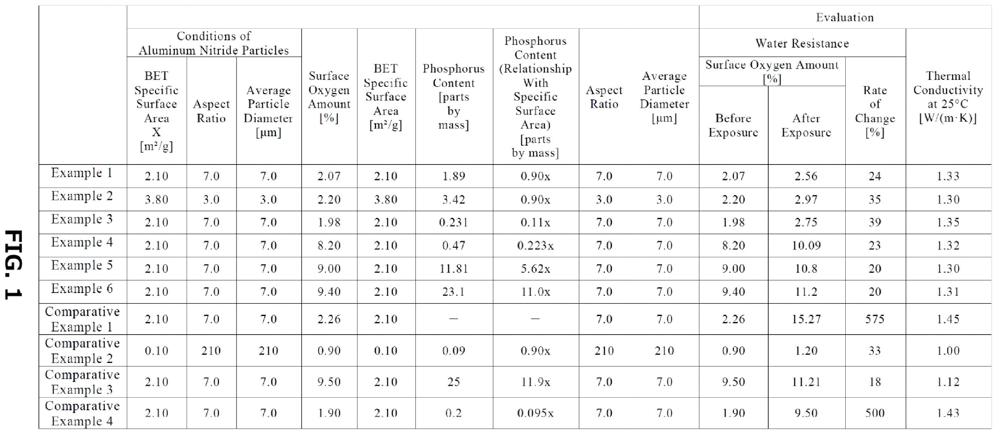

FIG. 1 is a table showing evaluation results together with configurations of the aluminum nitride-based fillers of Examples and Comparative Examples.

### MODE FOR CARRYING OUT THE INVENTION

Preferred embodiments of the present invention will be described below in detail.

### Aluminum Nitride-Based Filler

First, the aluminum nitride-based filler of the present invention will be described.

The aluminum nitride-based filler of the present invention contains a fibrous aluminum nitride particle having a surface and an oxide coating film formed on the surface, wherein a surface of the oxide coating film on the aluminum nitride particle is subjected to a surface treatment with a phosphorus-based compound. The aluminum nitride-based filler of the present invention is characterized in that a surface oxygen amount measured by an NDIR method is 1.98% or more and 9.40% or less, and, when a specific surface area of the aluminum nitride particle measured by a BET method is represented by X [m²/g], the surface of the oxide coating film is subjected to the surface treatment with the phosphorus-based compound having a phosphorus content of 0.11X parts by mass or more and 11.0X parts by mass or less relative to 100 parts by mass of the aluminum nitride-based filler.

By satisfying such conditions, it is possible to provide an aluminum nitride-based filler having excellent water resistance and thermal conductivity.

More specifically, the aluminum nitride-based filler contains the fibrous aluminum nitride particle having a surface and the oxide coating film formed on the surface, and the surface of the oxide coating film on the aluminum nitride particle is subjected to the surface treatment with the phosphorus-based compound, whereby excellent water resistance can be imparted to the aluminum nitride-based filler.

In particular, when the surface oxygen amount of the aluminum nitride-based filler (surface oxygen amount measured by an NDIR method) is within the above-mentioned range, an appropriate amount of phosphorus can be stably attached to the surface of the aluminum nitride particle constituting the aluminum nitride-based filler, whereby both water resistance and thermal conductivity of the aluminum nitride-based filler can be made excellent.

Further, when the surface treatment with the phosphorus-based compound is performed such that the phosphorus content relative to the aluminum nitride particle in the aluminum nitride-based filler (surface treatment amount with phosphorus) is within the above-mentioned range, both water resistance and thermal conductivity of the aluminum nitride-based filler can be made excellent.

Further, since the aluminum nitride particle is fibrous, the aluminum nitride-based filler also becomes fibrous, and a heat transfer path can be suitably secured even when the number of contact points among the aluminum nitride-based fillers is small. In addition, since the number of contact points among the aluminum nitride-based fillers can be reduced, thermal resistance can be reduced. Accordingly, the aluminum nitride-based filler can have excellent thermal conductivity.

On the other hand, when the above-described conditions are not satisfied, the above-described excellent effects cannot be obtained.

For example, when the surface oxygen amount of the aluminum nitride-based filler is less than the above-mentioned lower limit, it becomes difficult to attach a sufficient amount of phosphorus to the surface of the aluminum nitride particle, and sufficient water resistance cannot be imparted to the aluminum nitride-based filler. Further, when the surface oxygen amount of the aluminum nitride-based filler exceeds the above-mentioned upper limit, thermal conductivity of the aluminum nitride-based filler decreases.

Further, for example, when the surface treatment with the phosphorus-based compound is performed such that the phosphorus content relative to the aluminum nitride particle in the aluminum nitride-based filler (surface treatment amount with phosphorus) is less than the above-mentioned lower limit, sufficient water resistance cannot be imparted to the aluminum nitride-based filler. Further, when the surface treatment with the phosphorus-based compound is performed such that the phosphorus content relative to the aluminum nitride particle in the aluminum nitride-based filler (surface treatment amount with phosphorus) exceeds the above-mentioned upper limit, thermal conductivity of the aluminum nitride-based filler decreases.

In the present invention, the surface oxygen amount of the aluminum nitride-based filler refers to an oxygen amount on a surface of the aluminum nitride-based filler and is a value including an oxygen amount in the oxide coating film and an oxygen amount in a surface-treated portion formed with the phosphorus-based compound. Further, normally, the oxygen amount in the oxide coating film can be calculated by subtracting the oxygen amount derived from the phosphorus-based compound used for the surface treatment from the above-mentioned surface oxygen amount (surface oxygen amount of the aluminum nitride-based filler), and the oxygen amount derived from the phosphorus-based compound can be calculated by subtracting the oxygen amount in the oxide coating film of the aluminum nitride particle from the above-mentioned surface oxygen amount.

In the following description, the aluminum nitride-based filler of the present invention may be simply referred to as a "filler."

### [1-1] Aluminum Nitride Particles

The aluminum nitride particles are particles serving as cores of the aluminum nitride-based filler of the present invention, and oxide coating films are formed on surfaces thereof.

Normally, in the aluminum nitride-based filler, a proportion occupied by surface-treated portions formed by the phosphorus-based compound is sufficiently smaller than a proportion occupied by the aluminum nitride particles, and the aluminum nitride particles have shapes and sizes similar to those of the corresponding aluminum nitride-based filler. In other words, the aluminum nitride particles are also fibrous.

An aspect ratio of the aluminum nitride particle, that is, a value of L1/L2 where a length of the aluminum nitride particle in a major axis direction is represented by L1 [µm] and a length thereof in a minor axis direction orthogonal to the major axis direction is represented by L2 [µm], is preferably 2 or more and 200 or less, more preferably 3 or more and 180 or less, and even more preferably 5 or more and 150 or less.

Accordingly, the above-described effects can be made more remarkable. Further, when the aluminum nitride-based filler is used to form a resin composition, flowability and moldability of the resin composition can be made favorable.

In the present specification, the "aspect ratio" refers to an arithmetic average value of aspect ratios of 30 randomly selected target particles.

The aluminum nitride-based filler also preferably satisfies conditions similar to those of the aspect ratio of the aluminum nitride particle described above.

Accordingly, effects similar to those described above can be obtained.

An average particle diameter of the aluminum nitride particles is not particularly limited, but D50 measured by measuring a volume distribution with a laser diffraction particle size distribution analyzer is preferably 0.1 µm or more and 500 µm or less, more preferably 1 µm or more and 100 µm or less, and even more preferably 1 µm or more and 50 µm or less.

Accordingly, water resistance of the aluminum nitride-based filler can be further improved. Further, when the aluminum nitride-based filler is dispersed in a resin to form a resin composition, catalyst poisoning resistance and filling properties can be further improved.

The aluminum nitride-based filler is also preferably configured to satisfy conditions similar to those of the average particle diameter of the aluminum nitride particles described above.

Accordingly, effects similar to those described above can be obtained.

### [1-1-1] Oxide Coating Film

An oxide coating film is formed on the surface of the aluminum nitride particle.

By forming the oxide coating film, excellent water resistance, catalyst poisoning resistance, filling properties and the like can be imparted to the aluminum nitride particle.

The oxide coating film may be a surface layer covering at least a part of the surface of the aluminum nitride particle but preferably covers substantially all of the surface of the aluminum nitride particle.

As the oxide, various metal oxides or non-metal oxides can be used. Examples thereof include aluminum oxide, silicon oxide, titanium oxide, zirconium oxide and cerium oxide. One or more of these may be contained. Among the above-described oxides, oxides obtained by a sol-gel method can be preferably used.

The formation amount (coating amount) of the oxide coating film is preferably 0.1 parts by mass or more and 50 parts by mass or less relative to 100 parts by mass of the aluminum nitride particle.

Accordingly, water resistance and thermal conductivity of the aluminum nitride-based filler can be further improved.

Further, a thickness of the surface layer is not particularly limited but may be 1 nm or more and 200 nm or less.

Accordingly, water resistance and thermal conductivity of the aluminum nitride-based filler can be further improved.

The surface oxygen amount of the aluminum nitride particle is preferably 0.5% or more and 3.0% or less.

Accordingly, during the surface treatment with the phosphorus-based compound, the phosphorus-based compound can be more suitably attached to the oxide coating film, whereby water resistance and thermal conductivity of the aluminum nitride-based filler can be further improved.

The surface oxygen amount of the aluminum nitride particle can be determined, for example, by performing the above-described measurement by the NDIR method on the aluminum nitride particle used as a raw material of the aluminum nitride-based filler.

The BET specific surface area of the aluminum nitride particle is preferably 0.5 m²/g or more and 4.0 m²/g or less.

Accordingly, during the surface treatment with the phosphorus-based compound, a sufficient amount of phosphorus can be attached to the surface thereof, whereby water resistance and thermal conductivity of the aluminum nitride-based filler can be further improved.

### [1-2] Surface Treatment with Phosphorus-Based Compound

In the aluminum nitride-based filler of the present invention, the surface of the oxide coating film on the aluminum nitride particle is subjected to a surface treatment with the phosphorus-based compound.

The phosphorus-based compound is not particularly limited, but an inorganic phosphoric acid compound or an organic phosphoric acid compound is preferably used.

Accordingly, OH groups present in the oxide coating film of the aluminum nitride particle react with phosphoric acid to form chemical bonds, whereby the phosphorus-based compound can strongly adhere to the aluminum nitride particle, and more excellent water resistance can be imparted to the aluminum nitride particle.

Examples of the inorganic phosphoric acid compound include phosphoric acid, orthophosphoric acid, pyrophosphoric acid, polyphosphoric acid, phosphorous acid, hypophosphorous acid, ammonium phosphate, ammonium hydrogen phosphate, ammonium dihydrogen phosphate, aluminum phosphate and sodium phosphate.

Examples of the organic phosphoric acid compound include acidic phosphate esters represented by the general formula (RO)₂P(O)OH or ROP(O)(OH)₂ (wherein R is an alkyl group, alkenyl group or aryl group having 1 to 18 carbon atoms), such as methyl acid phosphate, ethyl acid phosphate, butyl acid phosphate, 2-ethylhexyl acid phosphate, lauryl acid phosphate, palmityl acid phosphate, stearyl acid phosphate, oleyl acid phosphate, phenyl acid phosphate and nonylphenyl acid phosphate.

Further examples of the organic phosphoric acid compound include mono- or dialkyl, alkenyl or aryl esters of pyrophosphoric acid or polyphosphoric acid, such as di-2-ethylhexyl pyrophosphate; phosphonic acids and esters thereof, such as methylene phosphonic acid, aminomethylene phosphonic acid, t-butylnitrilobis methylene phosphonic acid, n-butylnitrilobis methylene phosphonic acid, nitrilotris methylene phosphonic acid, ethylenediamine tetramethylene phosphonic acid, 1-hydroxyethylidene-1,1-diphosphonic acid, butyl hydrogen phosphite, 2-ethylhexyl hydrogen phosphite, lauryl hydrogen phosphite and dibutyl hydroxymethyl phosphonate; and organic phosphoric acid compounds such as trimethyl phosphate, triethyl phosphate, tributyl phosphate, trioctyl phosphate, tricresyl phosphate and triphenyl phosphate.

Among these, it is preferable to use at least one selected from the group consisting of phosphoric acid, orthophosphoric acid, polyphosphoric acid, phosphorous acid, ammonium phosphate, ammonium dihydrogen phosphate, acidic phosphate esters, and salts thereof.

### [1-3] Other Conditions

The BET specific surface area of the aluminum nitride-based filler of the present invention is preferably 1.0 m²/g or more and 4.0 m²/g or less.

Accordingly, when the aluminum nitride-based filler of the present invention is used to form a resin composition, adhesion between the filler and the resin can be improved, whereby strength and thermal conductivity of a molded article produced using the resin composition can be further improved.

### Method for Producing Aluminum Nitride-Based Filler

Next, a method for producing the aluminum nitride-based filler will be described.

The aluminum nitride-based filler of the present invention can be suitably produced, for example, by a method including a preparation step of preparing a fibrous aluminum nitride particle having a surface and an oxide coating film formed on the surface, and a surface treatment step of subjecting the surface of the oxide coating film on the aluminum nitride particle to a surface treatment with a phosphorus-based compound.

### [2-1] Preparation Step

In the preparation step, the fibrous aluminum nitride particles each having the oxide coating film formed on surfaces thereof are prepared.

The aluminum nitride particles may contain other components (for example, Al₂O₃ and the like) within a range that does not impair the effects of the present invention.

The aluminum nitride particles may be produced by any method, and examples thereof include aluminum nitride particles obtained by a direct nitridation method and aluminum nitride particles obtained by a reduction method. Further, as a method for forming the oxide coating film on the surface of the aluminum nitride particle, a sol-gel method as described below is preferably used.

Specifically, the fibrous aluminum nitride particles each having the oxide coating film formed on the surface thereof can be suitably produced by a method including: (a) a first step of preparing a mixed liquid by adding an alkoxide compound to a dispersion liquid in which aluminum nitride powder is dispersed in a solvent; (b) a second step of hydrolyzing the alkoxide compound by adding an acid catalyst to the mixed liquid; (c) a third step of adding a base catalyst to the mixed liquid after the hydrolysis; and (d) a fourth step of drying a reaction product obtained thereby.

Specifically, for example, the aluminum nitride particles each having the oxide coating film formed on the surface thereof can be produced by the method described in JP-A-2021-127288.

Further, commercially available aluminum nitride particles may be used as the aluminum nitride particles. Examples of the commercially available aluminum nitride particles include "Tharmalnite" manufactured by U-MAP Co., Ltd.

### [2-2] Surface Treatment Step

In the surface treatment step, the aluminum nitride particles are surface-treated using the phosphorus-based compound.

Specifically, for example, the phosphorus-based compound can be attached to the surfaces of the aluminum nitride particles by mixing a dispersion liquid in which the aluminum nitride particles are dispersed in a solvent with the phosphorus-based compound.

The solvent used for the dispersion liquid is not particularly limited but is preferably an aqueous solvent. As the aqueous solvent, at least one selected from water, a water-soluble organic solvent, and a mixed solvent thereof can be preferably used.

Specific examples of the water-soluble organic solvent include alcohols such as methyl alcohol, ethyl alcohol, isopropyl alcohol, n-propyl alcohol, t-butyl alcohol, n-butyl alcohol and isobutyl alcohol; cellosolves such as ethyl cellosolve and butyl cellosolve; ethers such as propylene glycol monobutyl ether, dipropylene glycol monomethyl ether and propylene glycol monopropyl ether; and ketones such as acetone.

The content of the aluminum nitride particles in the dispersion liquid is not particularly limited but is preferably 10% by mass or more and 60% by mass or less.

The phosphorus-based compound may be mixed as it is with the dispersion liquid in which the aluminum nitride particles are dispersed in the solvent, or may be mixed, for example, in the form of an aqueous solution. When an aqueous solution of the phosphorus-based compound is used, a concentration of the phosphorus-based compound in the aqueous solution may be, for example, 0.05 g/L or more and 100 g/L or less.

When the phosphorus-based compound is added to the dispersion liquid in which the aluminum nitride particles are dispersed in the solvent, a method for adding the phosphorus-based compound is not particularly limited and may be any of a method in which the entire amount is added at once, a method in which the phosphorus-based compound is added in two or more portions, a dropwise addition method, and the like. Further, when the phosphorus-based compound is added, it is preferable to add the phosphorus-based compound while stirring the dispersion liquid.

The amount of the phosphorus-based compound to be used is appropriately set according to a type of the phosphorus-based compound and the like but is determined such that, when the specific surface area of the aluminum nitride particle measured by the BET method is represented by X [m²/g], the phosphorus content is 0.11X parts by mass or more and 11.0X parts by mass or less relative to 100 parts by mass of the aluminum nitride-based filler.

The preparation and stirring of the dispersion liquid can be carried out using known mixing devices, stirring devices and the like. Examples of the mixing devices and stirring devices include kneaders, kneading machines, rotary vessel stirrers, stirred reaction tanks, V-type stirrers, double-cone stirrers, screw mixers, sigma mixers, flash mixers, airflow stirrers, ball mills and edge runners.

The treatment temperature is normally set to a temperature equal to or lower than a boiling point of the solvent used but is not particularly limited thereto.

The stirring time is not particularly limited but may be 30 minutes or more and 4 hours or less.

### [2-3] Drying Step

The method for producing the aluminum nitride-based filler may further include, in addition to the above-described steps, a drying step of drying the obtained reaction product.

In the surface treatment step, the reaction product is generated as a solid content in the dispersion liquid, and the reaction product may be dried after the solid content is separated and recovered by solid-liquid separation, if necessary. As a method for the solid-liquid separation, a known method can be used, and examples thereof include filtration and centrifugation.

The drying temperature is not particularly limited but is preferably 50°C or higher and 150°C or lower. The drying time depends on the drying temperature but is preferably 5 minutes or longer. In addition to the above-described thermal drying, the solvent can also be removed under reduced pressure.

After the drying, heat treatment may be performed if necessary.

The treatment temperature in the heat treatment is not particularly limited but is preferably 200°C or higher and 800°C or lower, and more preferably 300°C or higher and 500°C or lower. The treatment atmosphere is not particularly limited and may be, for example, an air atmosphere.

### Applications of Aluminum Nitride-Based Filler

Next, applications of the aluminum nitride-based filler of the present invention will be described.

The aluminum nitride-based filler of the present invention can be used as various fillers (filling materials). In particular, it can be suitably used as a filler to be dispersed in a resin.

Since the aluminum nitride-based filler of the present invention uses aluminum nitride as core particles, it has particularly excellent thermal conductivity. Therefore, it can be suitably used as a filler for imparting high thermal conductivity (heat dissipation properties) to a resin composition.

Further, the aluminum nitride-based filler of the present invention contains the aluminum nitride particle having the surface and the oxide coating film formed on the surface and satisfies predetermined conditions regarding the surface oxygen amount and the phosphorus content, thereby having excellent water resistance. Therefore, even when the aluminum nitride-based filler of the present invention is dispersed in a resin, deterioration in quality of the resin due to reaction of aluminum nitride with moisture is suitably suppressed.

For the above-described reasons, the aluminum nitride-based filler of the present invention can be suitably used as a filler for resin compositions.

### Resin Composition

Next, the resin composition of the present invention will be described.

The resin composition of the present invention contains the above-described aluminum nitride-based filler and a resin.

Accordingly, it is possible to provide a resin composition having excellent water resistance and thermal conductivity. Further, reaction between the aluminum nitride-based filler and moisture in the atmosphere, moisture in the resin and the like is suitably suppressed, whereby high quality can be suitably maintained over a long period of time.

By dispersing the fibrous aluminum nitride-based filler in the resin such that the aluminum nitride-based filler is oriented in random directions along longitudinal directions thereof, a contact density among the aluminum nitride-based fillers per unit volume can be increased, whereby high thermal conductivity can be imparted to the resin composition even when the dispersion amount thereof is small.

The above-described effects are exhibited not only in the resin composition but also in a molded article produced using the resin composition.

As the resin, various thermoplastic resins, thermosetting resins and the like can be used. More specifically, examples of the resin include silicone resins, acrylic resins, epoxy resins, polyester resins, polyurethane resins, polyvinyl acetate resins, nitrocellulose resins and fluororesins.

Among these, the effects of the present invention are more remarkably exhibited when a resin polymerized and cured using a catalyst for which nitrogen in aluminum nitride acts as a catalyst poison (for example, a silicone resin) is used.

A method for mixing the aluminum nitride-based filler and the resin is not particularly limited, and various methods can be used, such as: (a) a method of kneading the filler into a molten resin; and (b) a method of adding the filler to a resin powder followed by melt-kneading.

The content (volume ratio) of the resin in the resin composition is preferably 5% by volume or more and 60% by volume or less, and more preferably 10% by volume or more and 50% by volume or less.

Accordingly, while sufficiently improving flowability of the resin composition, water resistance and thermal conductivity of a molded article produced using the resin composition can be further improved. Further, various mechanical properties such as strength and flexibility of a molded article produced using the resin composition can be made more favorable.

The content of the aluminum nitride-based filler in the resin composition may be 5 parts by mass or more and 900 parts by mass or less relative to 100 parts by mass of the resin.

The content (volume ratio) of the aluminum nitride-based filler in the resin composition is preferably 5% by volume or more and 60% by volume or less, and more preferably 10% by volume or more and 50% by volume or less.

Accordingly, while sufficiently improving flowability of the resin composition, water resistance and thermal conductivity of a molded article produced using the resin composition can be further improved. Further, various mechanical properties such as strength and flexibility of a molded article produced using the resin composition can be made more favorable.

Further, the resin composition of the present invention may further contain components other than the above-described aluminum nitride-based filler and resin. Hereinafter, such components are referred to as "other components."

Examples of the other components include fillers other than the aluminum nitride-based filler of the present invention, surfactants, curing agents, crosslinking agents, ultraviolet absorbers, antistatic agents, thickeners, colorants and corrosion inhibitors.

The content of the other components in the resin composition of the present invention is preferably 10% by mass or less, more preferably 7% by mass or less, and even more preferably 5% by mass or less.

### Molded Article

Next, the molded article according to the present invention will be described.

The molded article according to the present invention contains the aluminum nitride-based filler of the present invention.

In particular, the molded article according to the present invention is preferably produced using the resin composition of the present invention.

When the molded article according to the present invention is produced using the resin composition of the present invention, the molded article preferably has a composition similar to that of the above-described resin composition.

Accordingly, effects similar to those described above can be obtained.

The molded article according to the present invention may be any molded article but can be suitably applied to, for example, electronic components, automobile parts and the like, which are required to have high heat dissipation properties and water resistance.

A molding method for the molded article using the resin composition is not particularly limited, and known methods such as compression molding and injection molding can be used depending on the type of the resin to be used and the like.

A bending stress of the molded article is preferably 0.2 MPa or more, and more preferably 0.4 MPa or more.

Accordingly, the molded article can be suitably used as various parts.

In the present specification, the bending stress of the molded article refers to a value measured by a three-point bending test using a three-point bending test jig in accordance with the method described in JIS K7171:2016.

Further, thermal conductivity of the molded article at 25°C is preferably 1.0 W/(m·K) or more, and more preferably 4.0 W/(m·K) or more.

Accordingly, the molded article can be suitably applied to molded articles requiring higher thermal conductivity (heat dissipation properties).

Preferred embodiments of the present invention have been described above, but the present invention is not limited thereto.

For example, the aluminum nitride-based filler of the present invention is not limited to one produced by the production method as described above. More specifically, the aluminum nitride-based filler of the present invention may be produced, for example, by a method further including other steps in addition to the above-described steps.

### EXAMPLES

Hereinafter, the present invention will be described in more detail with reference to specific examples, but the present invention is not limited to these examples. In the following description, treatments for which no temperature conditions are specified were performed at room temperature, specifically 25°C. Furthermore, various measurement conditions for which no temperature conditions are specified are values measured at room temperature, specifically 25°C.

### Production of Aluminum Nitride-Based Filler

### (Example 1)

First, Tharmalnite manufactured by U-MAP Co., Ltd. was prepared as fibrous aluminum nitride particles each having an oxide coating film formed on a surface thereof.

The aluminum nitride particles had a BET specific surface area of 2.10 m²/g and an aspect ratio of 7.0.

1500 g of isopropyl alcohol was charged into a 3 L container with a lid. While stirring the isopropyl alcohol, 20.0 g of the above-described aluminum nitride particles was added and sufficiently dispersed.

To this dispersion liquid, 1.2 g of a 10% by mass aqueous phosphoric acid solution was slowly added. After stirring for 30 minutes, fine particles were removed and solid-liquid separation was carried out using a filter. The obtained solid content was dried in a vacuum at 70°C, whereby an aluminum nitride-based filler surface-treated with phosphoric acid was obtained.

### (Examples 2 to 6)

Aluminum nitride-based fillers surface-treated with phosphoric acid were produced in the same manner as in Example 1 except that conditions of the fibrous aluminum nitride particles used as raw materials and an amount of phosphoric acid used were changed.

### (Comparative Example 1)

Without performing surface treatment with the phosphorus-based compound, the aluminum nitride particles were used as the aluminum nitride-based filler of Comparative Example 1.

### (Comparative Examples 2 to 4)

Aluminum nitride-based fillers surface-treated with phosphoric acid were produced in the same manner as in Example 1 except that conditions of the fibrous aluminum nitride particles used as raw materials and an amount of phosphoric acid used were changed.

### Evaluation

The following evaluations were performed on the aluminum nitride-based fillers of the above-described Examples and Comparative Examples.

### [7-1] Surface Oxygen Amount

The surface oxygen amount was measured by a method in which thermal decomposition was caused in an inert gas and infrared absorption was measured. For the measurement, an oxygen/nitrogen analyzer (EMGA-2800) manufactured by HORIBA, Ltd. was used.

### [7-2] BET Specific Surface Area

The BET specific surface area was measured using a fully automatic specific surface area measuring apparatus (Macsorb^{®} HM Model-1201) manufactured by Mountech Co., Ltd.

### [7-3] Evaluation of Water Resistance

The aluminum nitride-based fillers of the above-described Examples and Comparative Examples were exposed to a high-temperature and high-humidity environment at 85°C and 85 RH% for 16 hours using an environmental testing machine (ESPEC SH242) manufactured by ESPEC Corp.

The surface oxygen amount was measured before and after the exposure to the high-temperature and high-humidity environment, and a rate of change was calculated according to the following equation. 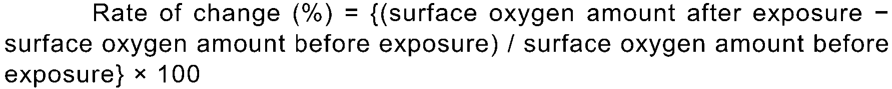 Rate of change (%) = {(surface oxygen amount after exposure - surface oxygen amount before exposure) / surface oxygen amount before exposure} × 100

It can be said that the smaller the value of the rate of change is, the more excellent the water resistance is.

### [7-4] Evaluation of Thermal Conductivity

The aluminum nitride-based fillers of the above-described Examples and Comparative Examples were dispersed in a silicone resin to produce resin compositions. The content of the aluminum nitride-based filler in the resin composition was 5% by volume, and the content of the resin in the resin composition was 95% by volume. Further, thermal conductivity of the silicone resin at 25°C was 0.2 W/(m·K).

The obtained resin composition was cast into a disk-shaped silicone mold having a diameter of 25 mm and a thickness of 5 mm and treated at 150°C for 60 minutes, whereby a molded article serving as a sample for thermal conductivity measurement was obtained.

For each obtained sample for thermal conductivity measurement, thermal conductivity was measured by a transient method using a thermal conductivity measuring apparatus (TCi) manufactured by C-THERM Technologies Ltd.

These evaluation results are collectively shown in FIG. 1 together with configurations of the aluminum nitride-based fillers of the above-described Examples and Comparative Examples. In FIG. 1, the value in the column "Phosphorus Content [parts by mass]" indicates a proportion of phosphorus relative to 100 parts by mass of aluminum nitride, and the column "Phosphorus Content (Relationship with Specific Surface Area) [parts by mass]" indicates, in a form including X, a phosphorus amount used for the surface treatment relative to 100 parts by mass of the aluminum nitride-based filler, where a specific surface area of the aluminum nitride particles measured by a BET method is represented by X [m²/g].

As is clear from FIG. 1, according to the present invention, excellent water resistance and thermal conductivity were obtained. In contrast, satisfactory results were not obtained in the Comparative Examples.

Further, molded articles were produced using the aluminum nitride-based fillers of the above-described Examples in the same manner as in the above-described [7-4] except that the content of the aluminum nitride-based filler was variously changed within a range of 5% by mass or more and 60% by mass or less, and bending stress was measured for these molded articles. As a result, excellent effects were obtained in all cases.

### INDUSTRIAL APPLICABILITY

According to the present invention, it is possible to provide an aluminum nitride-based filler having excellent water resistance and thermal conductivity and also to provide a resin composition having excellent water resistance and thermal conductivity. Therefore, the present invention has industrial applicability.

## Claims

1. An aluminum nitride-based filler comprising:
a fibrous aluminum nitride particle having a surface; and
an oxide coating film formed on the surface;
wherein a surface of the oxide coating film on the aluminum nitride particle is subjected to a surface treatment with a phosphorus-based compound,
wherein a surface oxygen amount measured by an NDIR method is 1.98% or more and 9.40% or less, and
wherein, when a specific surface area of the aluminum nitride particle measured by a BET method is represented by X [m²/g], the surface of the oxide coating film is subjected to the surface treatment with the phosphorus-based compound having a phosphorus content of 0.11X parts by mass or more and 11.0X parts by mass or less relative to 100 parts by mass of the aluminum nitride-based filler.

2. The aluminum nitride-based filler as claimed in claim 1, wherein the phosphorus-based compound is an inorganic phosphoric acid compound or an organic phosphoric acid compound.

3. The aluminum nitride-based filler as claimed in claim 1 or 2, wherein the specific surface area measured by the BET method is 1.0 m²/g or more and 4.0 m²/g or less.

4. The aluminum nitride-based filler as claimed in claim 1 or 2, wherein an aspect ratio of the aluminum nitride particle is 2 or more and 200 or less.

5. A resin composition comprising:
the aluminum nitride-based filler as claimed in claim 1 or 2; and
a resin.

6. The resin composition as claimed in claim 5, wherein a content of the aluminum nitride-based filler is 5% by volume or more and 60% by volume or less.
